# FASCICULE DE BREVET EUROPEEN

(11) **EP 1 064 318 B1**
(45) Date de publication et mention de la délivrance du brevet: **18.08.2004**
(21) Numéro de dépôt: 99911847.4
(22) Date de dépôt: 18.03.1999
(51) Int. Cl.: C08G 69/48, C09J 177/08, C09J 201/10

(54) **POLYAMIDE THERMOFUSIBLE ET RETICULABLE, L'UN DE SES PROCEDES D'OBTENTION ET COLLE LE COMPRENANT**
HEISSSCHMELZENDES UND VERNETZBARES POLYAMID, HERSTELLUNGSVERFAHREN UND VERWENDUNG ALS KLEBEMITTEL
THERMOFUSIBLE AND CROSSLINKABLE POLYAMIDE AND ONE OF THE METHODS FOR OBTAINING SAME AND ADHESIVE COMPRISING SAME

(30) Priorité: 18.03.1998 FR 9803558
(43) Date de publication de la demande: 03.01.2001
(73) Titulaire: TRL, 07000 Privas (FR)
(72) Inventeur: MAESANO, Jean-Claude, F-07000 PRIVAS (FR)
(74) Mandataire: Fleurance, Raphael
(86) Numéro de dépôt international: PCT/FR1999/000615
(87) Numéro de publication internationale: WO 1999/047584

(56) Documents cités:
- EP-A- 0 686 658
- WO-A-88/08859
- WO-A-92/07020
- GB-A- 1 270 510
- US-A- 5 519 109

## Description

### DOMAINE TECHNIQUE :

Le domaine de l'invention est celui des polyamides thermoplastiques plus particulièrement destinés à être utilisés comme colle thermofusible (« hot melt »).

Plus précisément, l'invention vise une nouvelle classe de polyamides porteurs de greffons de réticulation de type alcoxysilane, ce qui leur confère la propriété d'être réticulables en présence d'eau.

L'invention est également relative à un procédé de préparation de tels polyamides.

Enfin, l'invention a pour objet par ailleurs les adhésifs à fusion (« hot melt ») comportant les susdits polyamides réticulables (PAR) alcoxysilylés.

### ART ANTERIEUR :

Les fonctions alcoxysilane des PAR ont la particularité de s'hydrolyser au contact de l'eau, par exemple celle contenue dans l'atmosphère ambiante. Cette hydrolyse conduit à la formation de fonctions silanol, qui se condensent mutuellement pour donner un réseau réticulé tri-dimensionnel. Ainsi dans le cas d'un collage de substrats avec une telle colle à fusion, la réticulation se poursuit grâce à l'eau provenant de l'air ambiant ou des substrats.

Une fois réticulés, ces PAR ont normalement des propriétés thermomécaniques et une résistance au fluage à haute température et sous charge (tenue à la température), significativement améliorées par rapport au polyamide non réticulé.

L'amélioration de la tenue à la température est au coeur de la problématique à la base de la présente invention. Or, cette recherche est a priori antinomique avec la caractéristique première requise selon laquelle ces polyamides se doivent d'être thermoplastiques ou thermofusibles pour, précisément, pouvoir être utilisés comme colle à fusion, par exemple. On est donc en plein paradoxe puisque l'on demande à des polymères thermoplastiques d'avoir un comportement de polymères thermodurcissables.

L'art antérieur est riche d'un certain nombre d'enseignements sur ces PAR.

Le brevet britannique N° 1 270 510, divulgue un polyamide obtenu par copolymérisation de comonomères diacide, d'une part, et de comonomères di et triamine, d'autre part. Selon ce brevet, la fraction acide comprend un dimère d'acide gras contenant 96 % d'un dimère en C₃₆ et 4 % d'un trimère en C₅₄. Cette fraction acide comporte également de l'acide adipique, de l'acide sébacique et un stoppeur de chaîne formé par l'acide acétique. La fraction amine est formée par de l'hexaméthylène diamine et de la diéthylène triamine. La copolymérisation s'opère sous atmosphère d'azote à une température comprise entre 200 et 250° C, à pression atmosphérique normale. Le polyamide obtenu est caractérisé par une masse molaire en poids supérieure à 100000 Da. Après refroidissement et solidification, 20 g de ce polyamide sont mis en fusion à 185° C pour être mélangés à 0,3 cm³ de γ-aminopropyltriéthoxysilane ou de 3,4-époxycyclohexyléthyltriméthoxysilane, soit 1,5% en poids. Compte tenu de la faible quantité de silane utilisée, les tenues températures de ces polyamides réticulés sont très modestes (T<200°C). En outre, sa masse molaire à l'état non réticulé est trop élevée pour que sa viscosité soit compatible avec des applications du type colle à fusion, qui requièrent que le polymère soit liquide pour pouvoir être aisément étendable sur les supports à coller. Il n'est fait aucune mention de l'amélioration de la flexibilité du matériau obtenu.

Le brevet français N° 2 535 729 décrit un procédé pour la fabrication de polyamides, au moins partiellement réticulés, à haute viscosité et à grande stabilité dimensionnelle à chaud, dans lequel :
- on fait réagir une masse fondue de polyamide anhydre avec un alcoxysilane, de préférence un trialcoxysilane dont la fonction de greffage est du type isocyanate et/ou époxy,
- et on amène ensuite le produit obtenu en contact avec de l'eau.

Le greffage des fonctionnalités alcoxysilane sur cette masse fondue de polyamide anhydre s'effectue dans une extrudeuse à 230°C. Ce PAR est utilisé pour la fabrication par moulage ou extrusion d'objets d'usage courant du type profilés, câbles et gaines électriques, plaques, feuilles ou analogues. Les applications colle à fusion ne sont pas mentionnées. Les polyamides plus spécialement visés sont ceux dont les comonomères diacide comprennent de 6 à 15 atomes de carbone, de type nylon. Dans ce cas, les produits fabriqués sont trop visqueux pour servir de colles thermofusibles. Ce PAR a une résistance au fluage à haute température et sous charge, qui reste encore perfectible à cause des faibles proportions de silane employées. En outre, l'allongement et vraisemblablement la flexibilité de ce PAR restent relativement faibles.

Selon une variante, il a été proposé dans l'état de la technique, de greffer les groupements de réticulation alcoxysilane, sur la chaîne polyamide, non pas par l'intermédiaire de la fonction réactive de l'organoalcoxysilane, mais par l'intermédiaire d'une rotule reliée, d'une part, à la fonction réactive de l'organoalcoxysilane et, d'autre part, à la chaîne polyamide. L'interposition de cette rotule ou de ce motif d'espacement entre le polyamide et chaque fonctionnalité de greffage alcoxysilyle, est réalisée par mise en oeuvre d'un adduit comprenant un composé difonctionnel, par exemple un diisocyanate et un organoalcoxysilane porteur d'une fonction réactive. Cette dernière permet d'assurer la liaison avec le composé difonctionnel par l'une des fonctions de celui-ci, tandis que l'autre de ces fonctions réagit avec le polyamide.

A titre d'illustration de cette classe de PAR à greffons alcoxysilane non directement liés aux polyamides, on évoquera la demande PCT WO 88/08 859. Selon cette demande, les polyamides de base sont obtenus par copolymérisation de dimères d'acide gras et d'une diamine formée par l'éthylènediamine ou la pipérazine. Le précurseur du greffon triéthoxysilane provient d'un adduit résultant de la réaction d'un diisocyanate avec un γ-amino ou un γ-mercaptopropyltriéthoxysilane. En pratique, c'est l'isophorone diisocyanate qui joue le rôle de rotule d'espacement. L'extrémité isocyanate libre de ce précurseur réagit avec les extrémités amine ou acide du polyamide. Il est également à souligner que ces PAR nécessitent la mise en oeuvre de 30 % en poids par rapport au polyamide, d'adduits isophorones diisocyanates + aminotrialcoxysilanes ainsi que d'un catalyseur de condensation indispensable à la réaction de réticulation. Ces dispositions pénalisent cette technique sur le plan économique et sur le plan de la facilité de mise en oeuvre.

Un autre exemple de ces techniques où l'on fait appel à un adduit avec motif d'espacement pour le greffage des fonctionnalités alcoxysilane, est donné par le brevet DE 39 42 616 qui, dans son exemple 3, divulgue une colle formée par un polyamide à terminaisons alcoxysilyle. Ce polyamide de viscosité importante est produit à partir d'un dimère d'acide gras du type pripol 1013, d'acide azélaïque, de pipérazine, d'éthylène diamine et d'un adduit isophorone diisocyanate + aminopropylméthyldiéthoxysilane et en présence d'un catalyseur de condensation (dilaurate de dibutylétain). Pour diminuer la viscosité à la température de fusion, il est prévu de rajouter un adduit 1 : 1 : 1, d'hexanol : isophoronediisocyanate : γ-aminopropylméthyldiéthoxysilane. La tenue à la température de cette colle à fusion préparée à partir de ce PAR, reste tout à fait optimisable puisqu'elle n'est que de 180°C après 7 jours de stockage dans le test selon ce brevet. Il n'est pas question d'amélioration de la flexibilité des PAR, tels que divulgués dans l'exemple 3 de ce document.

Ces PAR, dont les alcoxysilanes de réticulation sont reliés au polymère par des rotules d'espacement, ne semblent pas avoir prospérés dans ce domaine technique. En effet, le brevet US N° 5 519 109 plus récent, concerne des polyamides réticulables, porteurs à leurs extrémités de groupements alcoxysilane de réticulation. Ces polyamides sont obtenus à partir d'un prépolymère polyamide issu de la copolymérisation d'un dimère d'acide gras et d'hexaméthylène diamine. Ce prépolymère polyamide est mis à réagir avec un diacide, par exemple l'acide azélaïque, estérifié à chacune de ses extrémités carboxyle. Cette réaction conduit à un polyamide α,ω-diestérifié (diester méthylique). Le précurseur de greffon alcoxysilane mis en oeuvre ensuite, est, par exemple, un aminopropyltriméthoxysilane. Ce dernier est mélangé au polyamide à terminaisons ester en fusion, à 180° C. Le PAR à extrémités alcoxysilane ainsi obtenu ne présente conjointement dans aucun des cas cités, des caractéristiques de flexion et de résistances mécaniques optimales. Par ailleurs, le procédé de préparation du PAR selon ce brevet US ne présente certes pas les mêmes inconvénients que le greffage de la fonctionnalité de réticulation alcoxysilane à l'aide d'adduit, mais l'estérification des extrémités acide nécessite toujours une étape de synthèse supplémentaire, ce qui, en soi est gênant.

On connaît par ailleurs, au travers des demandes de brevet japonais, des techniques diverses de greffage de fonctionalités alcoxysilane sur des polyamides. On citera par exemple le greffage du polyamide par dissolution dans un milieu non-solvant (JP N° 52 08 9141 et JP N° 62 09 5371) ou par mélange physicochimique de poudres de polyamides (JP N° 2 016174) ou encore par trempage du polyamide dans une solution d'alcoxysilane (JP N° 6 192 638). Ces techniques posent d'importants problèmes de réactivité et sont totalement incompatibles avec la préparation de colles thermofusibles. Il s'ensuit que les PAR obtenus ne satisfont pas aux spécifications (notamment en termes de propriétés thermomécaniques), qui sont celles attendues pour les PAR dont il est question dans le cadre du présent exposé.

Il ressort de cette revue de l'état de la technique que les PAR greffés alcoxysilane connus sont des polymères thermoplastiques dont les propriétés thermomécaniques peuvent être améliorées. En particulier, ces matériaux ne présentent jamais conjointement d'intéressantes propriétés de résistance mécanique, d'allongement à la rupture, de tenue thermique, et surtout de flexibilité à l'état réticulé. Les systèmes de préparations des polyamides sont souvent complexes (multiétapes) et peu économiques. Les viscosités des produits étudiés antérieurement ne sont pas toujours compatibles avec une application dans le domaine des colles thermofusibles.

### EXPOSE SUCCINCT DE L'INVENTION :

Dans cet état de connaissances, l'un des objectifs essentiel de la présente invention est de fournir un polyamide thermofusible,
- réticulable en présence d'eau par l'intermédiaire des groupements alcoxysilane qu'il comprend,
- obtenu à partir notamment de comonomères diacide et de comonomères diamine,
- et qui soit apte à se comporter aussi bien comme un polymère thermoplastique que comme un polymère thermodurcissable, en ayant plus spécialement une résistance élevée au fluage à chaud et sous charge, ainsi qu'une flexibilité importante sous forme réticulée.

Un autre objectif essentiel de la présente invention est de fournir un polyamide thermofusible du genre sus-visé, qui possède une viscosité en fusion suffisamment faible pour pouvoir être sous forme liquide, aisément étendable sur les supports à coller, dans le cas des applications colle à fusion.

Un autre objectif essentiel de la présente invention est de fournir un polyamide thermofusible du genre sus-visé qui puisse être préparé aisément selon des méthodologies qui ne multiplient pas inconsidérément les étapes intermédiaires, au détriment de la qualité et du coût de revient du produit final.

Un autre objectif essentiel de la présente invention est de fournir des polyamides du genre sus-visé et qui soient particulièrement appropriés comme colle thermofusible (« hot melt »).

Un autre objectif essentiel de la présente invention est de fournir un procédé de préparation des polyamides PAR du genre sus-visé, qui soit simple et économique.

Un autre objectif essentiel de la présente invention est de fournir des colles thermofusibles à base des PAR sus-visés, ces collés devant permettre des collages résistants à la température et devant être facilement utilisables.

Ces objectifs, parmi d'autres, sont atteints par la présente invention qui concerne tout d'abord un polyamide thermofusible, réticulable (PAR) en présence d'eau par l'intermédiaire des groupements alcoxysilane qu'il comprend.

Ce PAR et tel que défini dans la revendication 1.

On entend par «état réticulé » au sens de l'invention, l'état dans lequel se trouve le PAR après avoir séjourné au moins dix jours à 25° C, dans une atmosphère dont l'humidité relative est supérieure à 50 %.

### EXPOSE DETAILLE DE L'INVENTION :

Ce PAR a une tenue au fluage à chaud supérieure à 200°C. C'est un polymère thermoplastique ayant en outre un comportement de polymère thermodurcissable et présentant d'excellentes propriétés thermomécaniques.

De surcroît, à l'état réticulé ce PAR a une remarquable flexibilité. Or, cette propriété est a priori antinomique avec l'acquisition de propriétés typiques des polymères thermodurcissables. Il s'agit là d'un résultat surprenant et inattendu, qui témoigne de l'activité inventive de la présente invention.

La caractéristique F de flexion et la tenue θ_{c} à la température sont des données fonctionnelles qui caractérisent le PAR conforme à l'invention. Ce mode de définition a été adopté car le descriptif structurel est difficilement envisageable en l'espèce.

Sans vouloir être lié par la théorie, il semble que cette caractéristique F élevée de flexion soit au moins en partie liée à la présence du ou des dimères d'acide gras à titre de comonomères. En effet, ceci diminue la proportion de ponts Si-O-Si par chaîne. Il en résulte une maille de réseau de réticulation très large, d'où une aptitude particulière à la déformation et à l'élasticité.

Le PAR selon l'invention se singularise également par sa masse molaire judicieusement limitée à 20 000, afin de ne pas atteindre des viscosités en fusion rhédibitoires pour les applications notamment colles thermofusibles. En effet, l'un des avantages des PAR selon l'invention est d'être doté d'une faible viscosité permettant, d'une part, des applications à faibles températures, et d'autre part une application facile avec un meilleur mouillage des substrats.

Par ailleurs, il est important de noter que les fonctionnalités de réticulation alcoxysilane du PAR selon l'invention sont reliées directement à celui-ci par l'intermédiaire d'une seule fonction de greffage, à l'exclusion de motifs ou de rotules d'espacement résultant de la mise en oeuvre d'un adduit comportant l'alcoxysilane avec une fonction réactive et un ou plusieurs autres composés polyfonctionnels d'espacement, porteurs chacun non pas d'une mais d'au moins deux fonctions de greffage, ce qui suppose que ce dernier est réalisé en plusieurs étapes et non directement en une seule étape.

En outre, le PAR selon l'invention présente, à l'état réticulé, conjointement une résistance mécanique (R) et un allongement à la rupture (A) élevés. Ces caractéristiques mécaniques sont déterminées par des tests définis dans la norme ASTM D 638 M.

En pratique, R est e.g. supérieure ou égale à 4 Mpa, de préférence comprise entre 4 et 20 Mpa.

A est quant à lui, e.g., supérieur ou égal à 200 %, de préférence compris entre 400 et 1000 %.

Les PAR préférés selon l'invention sont ceux obtenus à partir d'une composition comprenant :
- une partie acide (**I**)
- une partie amine (**II**)
- au moins un précurseur (**III**) de greffon alcoxysilane porteur d'au moins une fonction de greffage R^{g}
- et éventuellement un ou plusieurs additifs (**IV**).

Ces PAR ont, en outre, pour autre caractéristique d'obtention, celle selon laquelle la concentration en précurseur (**III**) dans la composition est supérieure à 3, et plus préférentiellement encore comprise entre 3 et 10 % en poids sec par rapport au mélange (**I**), (**II**), (**III**) et (**IV**).

La composition de départ avant copolymérisation et avant greffage des fonctionnalités de réticulation alcoxysilane, est naturellement déterminante pour la structure et donc les propriétés du PAR obtenu. Ainsi, suivant une caractéristique préférée de l'invention :
→ la partie acide (**I**) comprend :
   - a - 0,1 à 1 mole d'un ou plusieurs dimères d'acide gras,
   - b - 0 à 2 moles, de préférence 0 à 1 mole d'un ou plusieurs acides dicarboxyliques ou de leurs dérivés, de préférence parmi ceux comportant de 2 à 22 atomes de carbone en C₂-C₂₂,
   - c - 0 à 1 mole, de préférence 0 à 0,5 mole d'un ou plusieurs stoppeurs de chaine, avantageusement choisis parmi les monoacides ou leurs dérivés, de préférence parmi les monoacides gras comportant de 1 à 24 atomes de carbone ;
→ et la partie amine (**II**) est au moins en partie constituée par des diamines, de préférence aliphatiques et/ou cycloaliphatiques et/ou aromatiques et/ou hétérocycliques, et éventuellement par des monoamines et/ou des tri ou autres polyamines, cette partie amine (**II**) étant présente en quantité telle que le ratio molaire (**II**)/(**I**) = 0,5 à 2 de préférence 1 à 1,5, et plus préférentiellement encore est de l'ordre de 1,1.

Avantageusement, la partie acide (**I**) et la partie amine (**II**) sont telles que définies dans la revendication 3.

Il est du mérite des inventeurs d'avoir sélectionné une classe particulière de comonomères diacide du genre dimère, comme l'un des éléments de base de préparation du polyamide selon l'invention.

Avantageusement, les dimères la sont du type de ceux comportant 36 atomes de carbone, et sont, de préférence, incorporés sous la forme d'un mélange dont ils forment le constituant essentiel et qui comprend en outre des monomères et/ou des trimères d'acides gras.

Les dimères d'acides gras sont issus de la dimérisation des acides gras insaturés d'origine végétale ou animale, ayant de 12 à 22 atomes de carbone.

En pratique, il peut s'agir notamment des produits commercialisés sous les dénominations PRIPOL, EMPOL, UNIDYME. Ce sont des mélanges de monomères, dimères, trimères et polymères d'acides gras dans diverses proportions.

S'agissant des acides dicarboxyliques ceux-ci peuvent être par exemple aliphatiques, en C₆-C₁₆ on peut citer non limitativement à titre illustratif : acide adipique, acide pimélique, acide azélaique, acide sébacique, acide β-méthyladipique, acide subérique, acide nonanedicarhoxylique, acide décanedicarboxylique, acide dodécanedicarboxylique, acide n-dodécenylsuccinique, acide isododécénylsuccinique, acide isododécylsuccinique, acide isooctylsuccinique, acide n-octylsuccinique, ou leurs dérivés anhydride, ester et halogénure.

L'acide dicarboxylique peut aussi être de nature cycloaliphatique, (e.g. acides cyclohexanedicarboxyliques 1-3 et 1-4).

On peut également envisager l'emploi d'acides dicarboxyliques aromatiques, comme l'acide isophtalique ou l'acide térephtalique.

Classiquement, les monoacides, (avantageusement des acides gras), formant des stoppeurs de chaîne appropriés sont, par exemple, des composés en Ci-C₂₄, insaturés ou non. A titre d'exemples, on peut mentionner les dérivés d'acides gras connus sous la dénomination PRIFRAC commercialisés par la société UNICHEMA.

Les dérivés des acides dicarboxyliques Ib ou des monoacides Ic sont, par exemple, les sels d'acide (e.g. halogénures), les anhydrides et les esters.

Les amines de la partie II sont des polyamines, de préférence des diamines ou des triamines qui peuvent être aliphatiques, cycloaliphatiques, aromatiques, ou hétérocycliques.. Il peut s'agir par exemple : de pipérazine, d'éthylène diamine, de propylène-diamine, de 1,2-diaminopropane, de tétraméthylènediamine, d'hexaméthylènediamine, de 1,7-diaminoheptane, de 1,8-diaminooctane, de 1,9 diaminononane, de 1,10 -diaminodécane, voire de polyéthylène glycol diamine (Mw = 300-2 000) ou bien encore de diamines polyéthérées du type de celles commercialisées sous la dénomination JEFFAMINE par la société HUNTSMAN.

Selon une variante, on peut ajouter des acides aminés tels que les lactames contenant, de préférence de 6 à 22 atomes de carbone, comme par exemple l'ε-caprolactame, l'ω-lauryl lactame ou son aminoacide.

Selon une autre variante de l'invention, il est à noter que la ou les monoamines éventuellement présentes dans la partie (**II**) peuvent assumer le rôle de stoppeur de chaîne, seules ou en association avec le(s) stoppeur(s) de chaîne Ib.

S'agissant des précurseurs III de greffons alcoxysilane, ils répondent à la définition donnée ci-dessus par la formule :

(**III**) R^{g}-R¹-Si(R²)₃₋ₐ(R³)ₐ.

Suivant une disposition préférée de l'invention :
□ a = 0 ou 1, et plus préférentiellement encore 0,
□ R^{g} est sélectionnée parmi les fonctions comprenant un ou plusieurs motifs réactifs de type :
   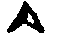 amine
   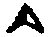 insaturation éthylènique
   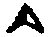 époxy
   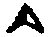 thiol
   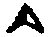 halogène
   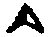 isocyanate ;
   R⁸ étant plus préférentiellement encore choisie dans le groupe de fonctions suivantes :
   aminé, vinyle, allyle, (méth)acryloyle, glycidyle, glycidyloxy, epoxy, mercapto, chlorure, isocyanato ;
□ R¹ est un alkylène en C₁-C₂₀, avantageusement en C₁-C₁₀ ou une liaison covalente reliant directement Si à R⁸ ;
□ R² est un alcoxyle en C₁-C₁₀ (avantageusement méthoxyle ou éthoxyle), un acétoxy ou un chlorure ;
□ R³ est un alkyle en C₁-C₆, avantageusement un méthyle.

De façon plus préférée encore, le polyamide thermofusible selon l'invention est tel que défini dans la revendication 2.

A titre d'exemples de précurseurs (**III**), on peut mentionner : le glycidyloxytriméthoxysilane (GLYMO), le glycidyloxytriétheoxysilane (GLYEO), l'aminopropyl-triméthoxysilane (AMMO), le γ-isocyanatopropyl-triméthoxysilane, le vinyl-triméthoxysilane, le vinyltriéthoxysilane, l'allyltriméthoxysilane, le vinyltriacétoxysilane, le vinyl-tris-(2-méthoxyéthoxy)silane.

Suivant une caractéristique remarquable de l'invention, les additifs éventuels (**IV**) sont choisis parmi : les antioxydants, les charges, les résines, les cires, les polymères, les plastifiants, les pigments, les colorants, les azurants, les anti-UV, et leurs mélanges.

A titre d'exemple d'additifs anti-oxydants, on peut citer l'Irganox 1010 de CIBA GEIGY.

Avantageusement, les additifs (**IV**) peuvent représenter de 0 à 50 % en poids sec de la composition (**I** + **II** + **III** + **IV**). De préférence les concentrations en additifs (**IV**) les plus couramment rencontrées seront de 0,5 à 10 % en poids.

S'agissant plus précisément de l'anti-oxydant, celui-ci peut être par exemple présent à raison de 0,5 à 3 % en poids de préférence de 0,5 à 1,5 % en poids.

Les polyamides thermofusibles selon l'invention sont également caractérisés en ce que, lors de leur obtention, les fonctions R^{g} des précurseurs (**III**) réagissent avec des fonctions réactives R^{r} des polyamides.

En pratique, les fonctions réactives R^{r} sont exclusivement des fonctions carboxylique COOH ou amine NH₂, présentes à l'extrémité des chaînes polyamides ou des fonctions amide CONHR du squelette polyamide.

Selon la valeur du ratio molaire **II/I**, les terminaisons amine ou acide seront majoritaires.

Suivant un autre de ces aspects, la présente invention concerne un procédé d'obtention, notamment du polyamide thermofusible tel que défini ci-dessus.

Ce procédé est caractérisé en ce qu'il consiste essentiellement à mettre en présence, en milieu anhydre, un polyamide dont les motifs récurrents sont constitués des comonomères diacide et des comonomères diamine, ce polyamide étant porteur de fonctions réactives R^{r} carboxylique, amine ou amide avec au moins un précurseur (**III**) de greffon alcoxysilane comprenant au moins une fonction de greffage R^{g}, les fonctions R^{g} étant destinées à réagir avec les fonctions R^{r} pour permettre le greffage d'alcoxysilane sur le polyamide et lui conférer ainsi une aptitude à la réticulation en présence d'eau, ce greffage s'opérant dans des conditions de température et de pression choisies de telles sorte que le polyamide soit à l'état fondu.

De préférence, ce procédé est tel que défini dans la revendication 6.

Selon un premier mode de mise en oeuvre du procédé selon l'invention, les étapes essentielles suivantes sont prévues :
- 1 - mise en présence d'une partie (**I**) des réactifs acide comprenant des comonomères diacide et d'une partie (**II**) des réactifs amine comprenant des comonomères diamine, et éventuellement d'autres additifs (**IV**) ;
- 2 - élimination d'eau ;
- 3 - cuisson pour permettre la copolymérisation conduisant à la synthèse de polyamide à terminaisons acide et/ou amine ;
- 4 - élimination éventuelle d'eau résiduelle ;
- 5 - addition éventuelle d'additifs (**IV**) ;
- 6 - ajout du précurseur (**III**) du greffon et réaction de ce dernier avec le polyamide ;
- 7 - élimination de l'eau résiduelle ;
- 8 - recueil du polyamide réticulable greffé par des alcoxysilanes, et conditionnement de celui-ci à l'abri de l'eau.

Ce premier mode préféré de mise en oeuvre correspond au cas où l'on réalise le greffage à l'état fondu des fonctionnalités alcoxysilane immédiatement à la suite de la copolymérisation du polyamide.

Selon une modalité avantageuse de ce premier mode de mise en oeuvre, la cuisson - 3 - s'opère à la pression atmosphérique normale, à une température supérieure à 20° C, de préférence comprise entre 220 et 250° C.

De préférence, ce procédé est tel que défini dans la revendication 9.

Par ailleurs, l'ajout du précurseur (**III**) conformément à l'étape - 6 - est, de préférence, effectué à une température inférieure à la température de cuisson. Cette température d'addition du précurseur (**III**) est avantageusement choisie de telle sorte qu'elle soit la plus proche possible du point de ramollissement du polyamide synthétisé pour éviter toutes dégradations thermiques du dit précurseur. Pour fixer les idées, on indiquera que l'intervalle de températures retenu est : 100 - 210° C.

De manière connue de l'homme du métier, les étapes -2-, -4-, -7-d'élimination d'eau du milieu réactionnel sont obtenues par l'action combinée ou non de la distillation, de la mise sous vide ou d'agents dessicateurs.

Pour s'affranchir de l'humidité atmosphérique, la réaction s'effectue de préférence sous atmosphère sèche par exemple, sous azote.

Selon un deuxième mode de mise en oeuvre, le procédé comprend les étapes suivantes :
- 1' - mise en fusion d'un polyamide à terminaisons acide et/ou amine et obtenu à partir de comonomères diacide et de comonomères diamine, éventuellement additionnés d'additifs (**IV**) ;
- 2' à 6' - correspondant aux étapes 4 à 8 telles que définies ci-dessus dans le premier mode de mise en oeuvre.

Ce deuxième mode de mise en oeuvre correspond au cas où le greffage est réalisé extemporanément à la synthèse du polyamide.

De préférence la fusion du polyamide s'effectue à la pression atmosphérique normale, à une température supérieure à 60°C, de préférence comprise entre 100 et 250°C.

La composition qualitative et quantitative des produits mis en oeuvre dans ce procédé selon l'invention, est telle que définie ci-dessus pour la description des PAR conformes à l'invention.

Il convient également de signaler que ces PAR obtenus notamment par le procédé présenté ci-dessus, sont conditionnés à l'abri de l'eau et en particulier à l'abri de l'eau atmosphérique. En effet, dès lors qu'ils sont mis en contact d'eau qu'elle provienne ou non de l'atmosphère, ces PAR à greffons de réticulation alcoxysilane réagissent avec l'eau ce qui provoque la réticulation et le durcissement des polyamides.

Dans le cas où les PAR selon l'invention sont employés comme élément constitutif essentiel d'une colle thermofusible, qui est un autre objet de la présente invention, on les utilise en les mettant en fusion, en les appliquant sur les substrats à coller et en réunissant lesdits substrats par leurs surfaces encollées. Le mécanisme d'adhésion intervient lors du refroidissement et de la solidification du PAR. La réticulation est initiée par l'eau provenant de l'atmosphère ou des substrats.

Il est important de noter que les PAR selon l'invention sont dotés d'un avantage non négligeable qui tient à ce que la présence de catalyseurs de condensation n'est pas indispensable à la bonne marche de la réticulation sous l'action de l'humidité.

Il convient également de rappeler que les PAR selon l'invention sont particulièrement intéressants en ce qu'ils bénéficient d'une résistance mécanique R et d'un allongement à la rupture A conjointement élevés. Ces propriétés thermomécaniques se conjuguent avec d'autres atouts qui sont : la flexibilité F donnée par le test Tf, la tenue à la température θ_{c} donnée par le test Ts et la tenue au froid θ_{f}. De surcroît, ces PAR ont une viscosité suffisamment faible pour permettre une bonne mouillabilité des substrats lors de l'application.

Par ailleurs, on indiquera également que la stabilité dimensionnelle de ces PAR s'observe bien au-delà de 200 °C, voire même au-delà de 300°C, jusqu'à la température de dégradation.

De plus, il faut savoir que ces PAR sont dotés d'une bonne résistance aux agressions chimiques et notamment aux solvants.

### APPLICATION INDUSTRIELLE :

Les domaines d'application des PAR selon l'invention en tant que colle thermofusible et/ou en tant que matériau d'encapsulation et/ou d'isolation, sont nombreux et variés. On peut citer en particulier, le domaine de la connectique électrique ou électronique, et plus spécialement dans des environnements où de hautes résistances à la température sont requises. Il peut s'agir, par exemple, de la connectique automobile. Une fois fondus, les PAR selon l'invention adhèrent parfaitement aux zones de connexion et/ou aux éléments à isoler/encapsuler. Ils forment des revêtements étanches qui résistent au froid, à la chaleur, à l'eau ou à d'autres éléments agressifs de l'environnement.

Ainsi, selon un autre de ses aspects, la présente invention concerne l'utilisation des PAR tels que définis ci-dessus, dans le cadre de la fabrication de cartes électroniques, (y compris les circuits imprimés), destinées notamment aux véhicules automobiles et aux appareils électroménagers.

Dans cette application, les PAR sont employés comme résine / revêtement de protection, en particulier contre l'humidité et/ou contre la chaleur résultant de l'exposition à des températures élevées (par exemple de l'ordre de 150°C).

En pratique, les PAR thermofusibles sont appliqués (nappés) à l'état fondu sur les cartes électroniques. Le revêtement ainsi obtenu, réticule en présence d'eau (atmosphère humide) après un certain temps, variable selon la nature du PAR.

Avantageusement, ce procédé de revêtement de cartes électroniques peut comprendre, selon un mode de mise en oeuvre particulier, les trois étapes essentielles suivantes :
- 1 - délimitation de la zone à protéger sur la carte, à l'aide d'au moins un cordon de polymère, e.g. de PAR, très cohésif (forte viscosité) ;
- 2 - nappage de la zone ainsi délimitée avec un PAR suffisamment fluide pour être aisément étendable,
- 3 - réticulation en atmosphère humide du PAR constituant le cordon et de préférence du PAR constituant la nappe contenue sur la carte à l'intérieur de l'enceinte délimitée par le cordon, pour atteindre les caractéristiques souhaitées de non-thermofusabilité.

L'intérêt des PAR dans ce procédé est de permettre un application aisée du revêtement, sans qu'il soit nécessaire de mettre en oeuvre un traitement postopératoire lourd, ou de limiter de manière drastique le temps de nappage.

Les PAR selon l'invention peuvent également être employés dans des dispositifs électriques, électroniques devant satisfaire à des normes anti-feu.

Dans ces applications encapsulation / isolation les PAR sont coulés à chaud et moulés sur les éléments à encapsuler/isoler.

De plus, comme déjà signalé, les PAR constituent d'excellentes colles thermofusibles permettant de fixer l'un à l'autre de manière fiable et durable de nombreux matériaux. e.g. : plastiques, verre, bois, métaux.

La présente invention sera mieux comprise à l'aide des exemples qui suivent qui montrent la préparation de différents PAR ainsi que l'évaluation de leurs propriétés notamment thermomécaniques.

### EXEMPLES :

### A - MATIERES PREMIERES

1) partie (1) acide
   la - Dimère diacide
      PRIPOL 1013 : mélange issu de coupes végétales riches en dimère diacide en C36, commercialisé par UNICHEMA et comprenant plus précisément 94% de dimère, 4% maximum de trimère et 0 à 2% de monomère.
      PRIPOL 1017 : mélange issu de coupes végétales riches en dimère diacide en C36, commercialisé par UNICHEMA et comprenant plus précisément 74% de dimère, 20% de trimère et 0 à 6% de monomère.
   Ib - acide dicarboxylique
      Acide sébacique C₁₀
      Acide azélaïque C₉
      Acide adipique C₆
   Ic - stoppeur de chaîne
      PRIFRAC® 2980 : monoacide en C₁₈ commercialisé par UNICHEMA et constitué par 98% d'acide stéarique.
      RESINOLINE BD2 commercialisé par la société DRT et constitué par un acide gras d'huile de bois à 2 % d'acide résinique maximum.
2) Partie (II) Amine
   EDA : Ethylène diamine ;
   HMDA : hexaméthylène diamine
   PIP : Pipérazine
   JEFFAMINE® D2000 : diamines polyéthérées commercialisées par
   HUNTSMAN répondant à la formule H₂N-R¹-O-(R²O)ₓ-R³-NH₂
   (avec R¹, R², R³ = alkyle C₁-C₄)
3) Précurseur (III) de greffon dioxysilane
   DYNASYLAN® GLYMO 3-glycidyloxypropyl-triméthoxysilane
   DYNASYLAN® GLYEO 3-glycidyloxypropyl-triéthoxysilane
   DYNASYLAN® AMMO 3-aminopropyl-triméthoxysilane
   La marque DYNASYLAN® est une propriété de la société HÜLS
   SILQUEST® A1310 γ isocyanatopropyl-triméthoxysilane
   La marque SILQUEST® est une propriété de la société WITCO
4) Additifs IV
   Antioxydant : dérivé phénolique IRGANOX® 1010 commercialisé par CIBA CEIGY

### B - METHODOLOGIE

Le procédé de synthèse d'un polyamide réticulé est par exemple le suivant :
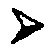 Mise en présence des réactifs : diacides + diamines + additifs éventuels.
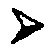 Distillation : déplacement de l'équilibre de la réaction par élimination d'H₂O.
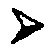 Cuisson (durée minimale 1 H) pour permettre aux chaînes macromoléculaires de croître.
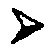 Vide : élimination de l'eau résiduelle
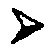 Ajout éventuel d'additif (anti-oxydant, pigments, anti-azurant...)
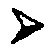 Ajout du silane
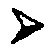 Vide
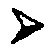 Soutirage

### C - TESTS

Le test Tf (flex test) est un test de fatigue : une lamelle de produit d'épaisseur 1 mm est courbée alternativement à 45° à 100 coups par minute. Le temps est compté quand l'éprouvette casse.

Le test T_{g} (test saft) correspond à la norme ASTM D 4498. Selon ce test on réalise un collage carton/carton sur une section de 2,5 cm x 2,5 cm. Un poids de 500 g est attaché à une extrémité du collage et le tout est suspendu dans une étuve. La température de l'étuve varie de 0,5° C/min. La température à laquelle il y a rupture de l'assemblage correspond à la valeur en °C mesurée.

La résistance mécanique à la rupture R et l'allongement à la rupture A sont mesurés par le test défini dans la norme ASTM D 638M.

η_{T} est la viscosité mesurée à la température T dans un appareillage de type Brookfield selon la norme ASTM D 3236.

La tenue au froid θ_{f} est évaluée par une mesure dynamique à froid de la résistance à la flexion du matériau selon la norme ASTM D 3111

### EXEMPLE 1 :

**1.1. Formulation (% en masse) :**

| | |
|---|---|
| I - Dimère diacide Pripol 1013 | 63,7 % |
| I - Acide Sébacique | 6,7 % |
| I - Prifac 2980 (monoacide gras) | 2,9 % |
| II - Ethylène Diamine | 8,9 % |
| II - Pipérazine | 12,8 % |
| IV - Irganox 1010 | 1 % |
| III - précurseur de greffon de réticulation : Glymosilane | 4 %. |

**1.2.** Les PAR ainsi obtenus réticulent sous atmosphère ambiante. On évalue leurs propriétés à l'état réticulé après 21 jours de stockage à l'ambiante. Après application, le polymère est laissé sous atmosphère ambiante pendant 21 jours. Les caractéristiques thermomécaniques obtenues après ce vieillissement sont données dans le tableau 1 suivant :

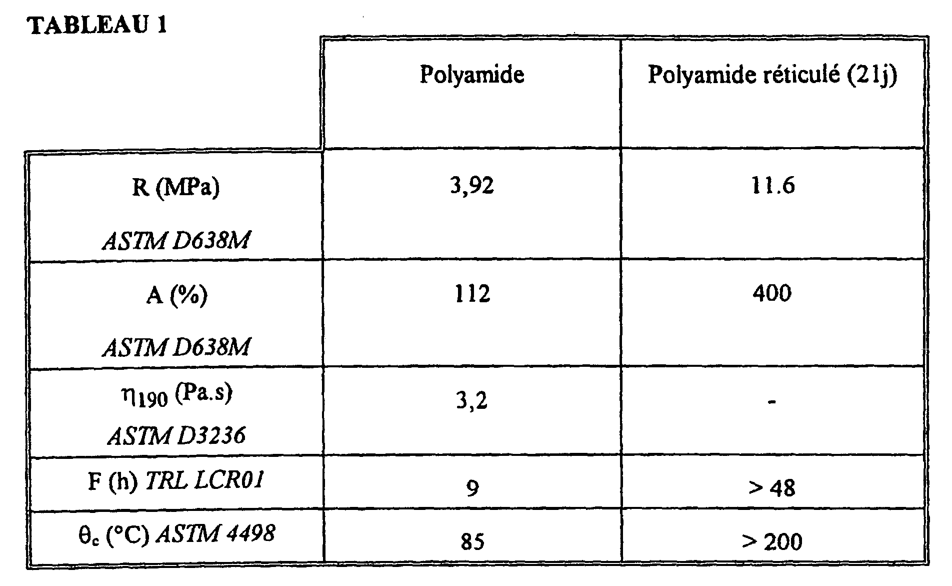

### EXEMPLES COMPARATIFS 2₁, 2₂, 3, 7, 9, 14, 16 ET EXEMPLES 4 à 6, 8, 10 à 13, 15 ET 17

L'exemple 2₂ comparatif correspond à l'exemple de la demande DE 3942616. Pour le greffage de la fonctionnalité réticulante alcoxysilane, on met en fusion un polyamide A et on rajoute l'adduit comprenant comme premier constituant de l'isophorone disocyanate dont l'une des fonctions de greffage isocyanate réagit avec le polyamide A et dont l'autre fonction de greffage isocyanate réagit avec le deuxième constituant de l'adduit : le γ- aminopropylméthyldiéthoxysilane. Le rapport des 2 constituants de l'adduit est de 1 : 1.

L'exemple 2₁ comparatif est le témoin sans adduit de l'exemple 2₂ comparatif.

Dans les exemples 3 comparatif à 6, on teste un polyamide B en faisant varier la concentration de précurseur alcoxysilane (**III**).

Dans les exemples 7 comparatif à 17, on met en oeuvre différents polyamides C, D, E, F, G, avec ou sans greffage d'alcoxysilanes, différents précurseurs (**III**) étant testés.

Le Tableau 2 ci-après donne la composition des différents polyamides mis en oeuvre.

Le Tableau 3 ci-après donne les conditions de greffage dans les exemples ainsi que les résultats de l'évaluation des propriétés des polyamides testés.

### Commentaires

Les résultats présentés au Tableau 3 ci-dessus montrent que les PAR greffés alcoxysilane selon l'invention, sont dotés de résistances mécaniques R et d'allongements à la rupture A conjointement et significativement élevées. Cette supériorité de propriétés s'apprécie par comparaison au greffage de l'art antérieur au moyen d'adduits et par comparaison aux polyamides exempts de greffons alcoxysilanes.

Les PAR selon l'invention présentent d'excellentes caractéristiques de flexibilité F de tenue à la température θ_{c} et de tenue au froid θ_{f}.

C'est ainsi que l'augmentation de R et de A, peuvent atteindre respectivement des facteurs **3** et **6** par rapport au polyamide non greffé alcoxysilane. Il est en outre particulièrement surprenant d'observer que la flexibilité F est quant à elle accrue dans un facteur au moins égale à 10.

Enfin, la tenue à la température θ_{c} est très largement supérieure à 200°C tandis que la tenue au froid θ_{f} peut atteindre - 50°C.

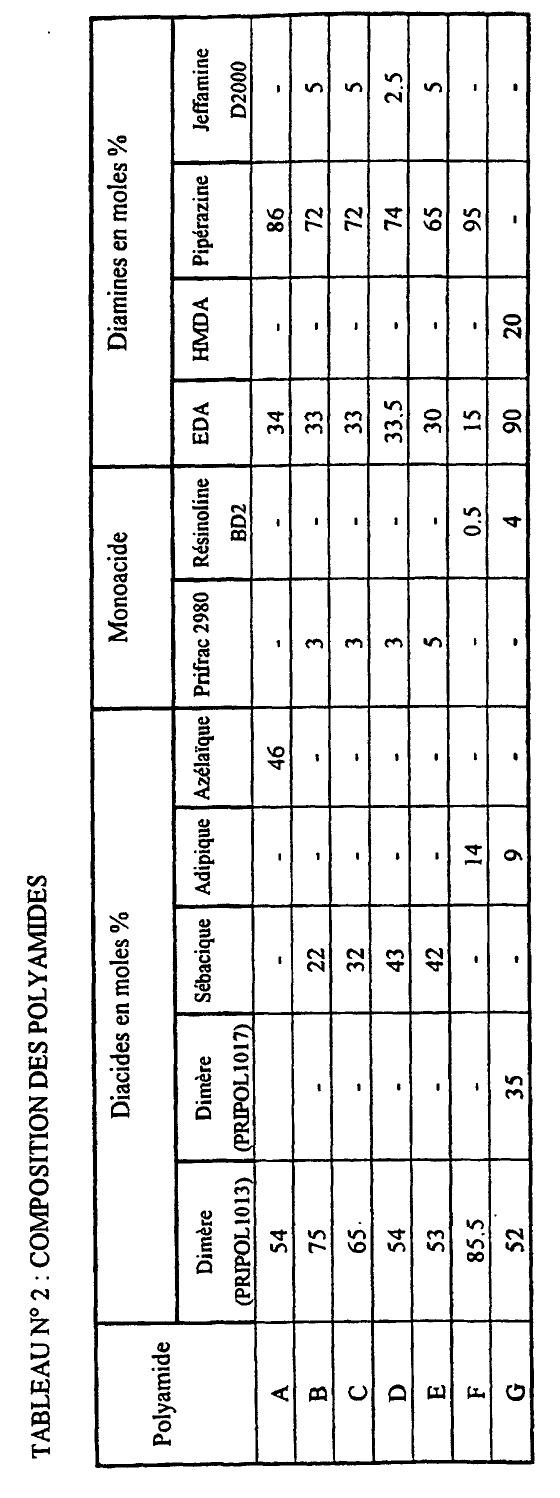

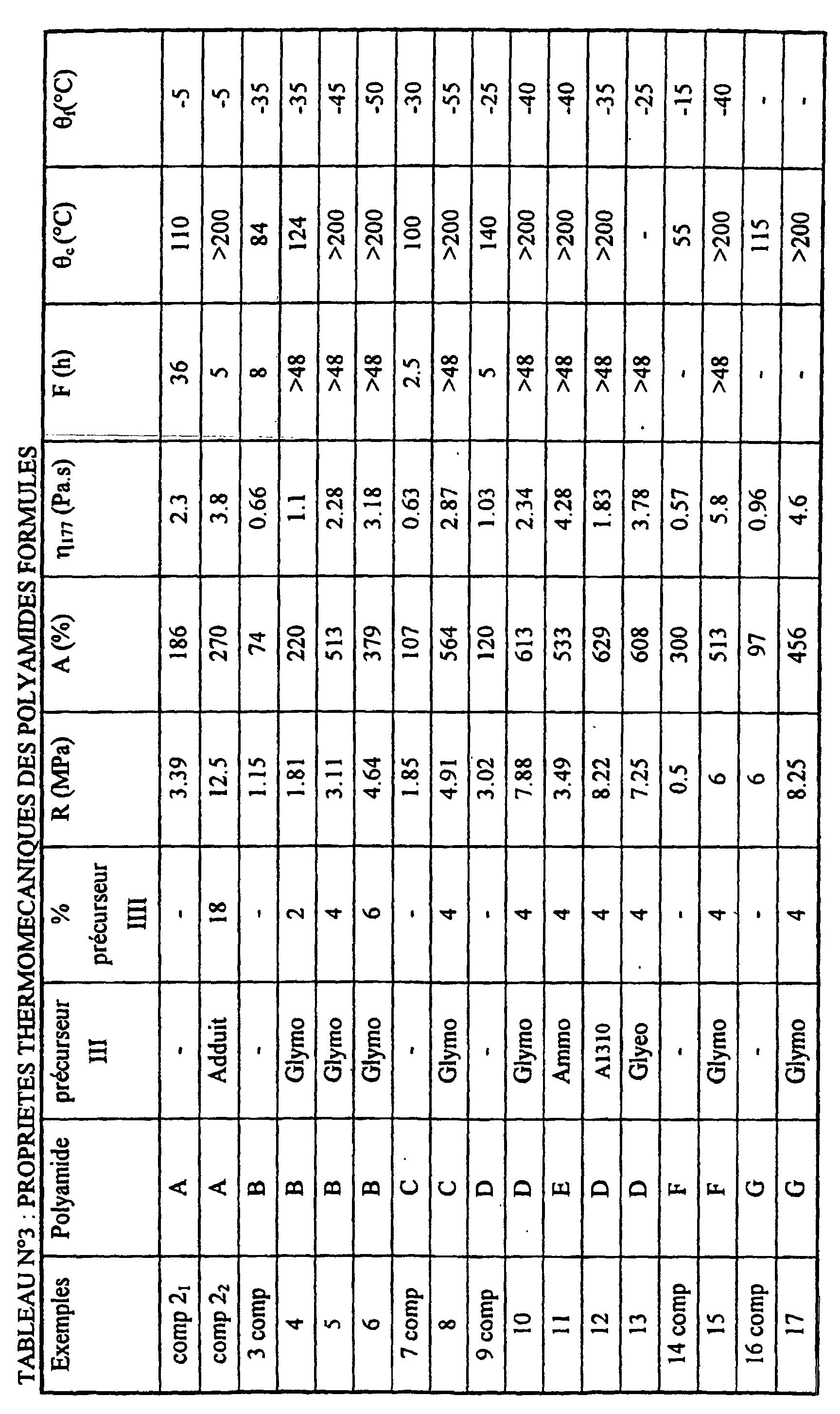

## Revendications

1. Polyamide thermofusible, réticulable en présence d'eau par l'intermédiaire des groupements alcoxysilane qu'il comprend, ce polyamide étant obtenu à partir:
- une partie acide (**I**) comprenant des comonomères diacide,
- une partie amine (**II**) comprenant des comonomères diamine,
- au moins un précurseur (**III**) de greffon alcoxysilane porteur d'au moins une fonction de greffage R^{g}
- et éventuellement un ou plusieurs additifs (**IV**),
**caractérisé en ce que** :
• les comonomères diacide sont au moins en partie constitués par des dimères d'acide gras, comportant de 32 à 44 atomes de carbone,
• il possède une masse molaire en poids Mw exprimée en Daltons ≤ 20 000 ;
• il présente à l'état véticulé
→ une resistance mécanique (R) -norme ASTM D 638 M- supérieure ou égale à 4 Mpa ;
→ un allongement à la rupture (A) -norme ASTM D 638 M- supérieur ou égal à 200% ;
→ une caractéristique F de flexion, mesurée en heures selon un test Tf (flex test) de fatigue, dans lequel une lamelle de polyamide considéré, de 1mm d'épaisseur est courbée alternativement à 45° à 100 coups par minute; le temps F étant compté quand l'éprouvette casse :
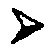 F ≥ 40
→ une tenue θ_{c}, à la température, mesurée en °C selon un test Ts (test saft), correspondant à la norme ASTM D 4498 :
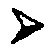 θ_{c} ≥ 180
• les groupements alcoxysilane de réticulation sont apportés par greffage direct, sur les fonctions réactives Rr = amine et/ou carboxyle et/ou amide du polyamide, d'un précurseur (**III**) de greffons alcoxysilane de formule :
(**III**) R^{g}-R¹-Si(R²)₃₋ₐ(R³)ₐ
dans laquelle :
■ a = 0, 1 ou 2
■ R^{g} est une fonction de greffage apte à réagir avec R^{r} et choisie parmi les fonctions comprenant un ou plusieurs motifs réactifs de type :
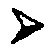 amine
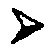 insaturation éthylènique
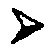 époxy
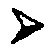 thiol
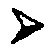 halogène
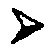 isocyanate ;
■ R¹ est un alkylène en C₁-C_{20,} avantageusement en C₁-C₁₀ ou une liaison covalente reliant directement Si à R^{g} ;
■ R² est un radical correspondant à un alcoxyle, un acyle ou un halogénure, les radicaux R² étant identiques ou différents entre eux quand a ≠ 2 ;
■ R³ est un radical alkyle, de préférence en C₁-C₆, les radicaux R³ étant identiques ou différents entre eux quand a = 2.
• la concentration en précurseur (**III**) dans la composition est supérieure à 3%, de préférence comprise entre 3 et 10 % en poids sec par rapport au mélange (**I**) (**II**) (**III**) et (**IV**).

2. Polyamide thermofusible selon la revendication 1, **caractérisé :**
• **en ce que**, pour les alcoxysilanes de formule (III), R^{g} est choisie dans le groupe de fonctions suivantes :
amine, vinyle, allyle, (méth)acryloyle, glycidyle, glycidyloxy, époxy, mercapto, chlorure, isocyanato;
• et **en ce qu'**il possède une masse molaire en poids Mw exprimée en Daltons:
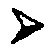 800≤Mw≤10 000

3. Polyamide thermofusible selon la revendication 1 ou 2, **caractérisé en ce que** :
→ la partie acide (**I**) comprend :
- a - 0,1 à 1 mole d'un ou plusieurs dimères d'acide gras,
- b - 0 à 2 moles, d'un ou plusieurs acides dicarboxyliques ou de leurs dérivés comportant de 2 à 22 atomes de carbone,
- c - 0 à 1 mole, de préférence 0 à 0,5 mole d'un ou plusieurs stoppeurs de chaîne, choisis parmi les monoacides gras comportant de 1 à 24 atomes de carbone ;
→ et la partie amine (**II**) est au moins en partie constituée par des diamines, et éventuellement par des monoamines et/ou des tri ou autres polyamines.

4. Polyamide thermofusible selon l'une quelconque des revendications 1 à 3, **caractérisé en ce que** les dimères Ia sont du type de ceux comportant 36 atomes de carbone, et sont incorporés sous la forme d'un mélange dont ils forment le constituant essentiel et qui comprend en outre des monomères et/ou des trimères d'acides gras.

5. Polyamide thermofusible selon l'une quelconque des revendications 1 à 4, **caractérisé en ce que** les additifs éventuels (**IV**) sont choisis parmi : les antioxydants, les charges, les résines, les cires, les polymères, les plastifiants, les pigments, les colorants, les azurants, les anti-UV, et leurs mélanges.

6. Procédé d'obtention du polyamide thermofusible selon l'une quelconque des revendications 1 à 5, **caractérisé en ce qu'**il consiste essentiellement à mettre en présence, en milieu anhydre, un polyamide dont les motifs récurrents sont constitués des comonomères diacide et des comonomères diamine, ce polyamide étant porteur de fonctions réactives R^{r} carboxylique, amine ou amide, avec au moins un précurseur (III) de greffon alcoxysilane comprenant au moins une fonction de greffage R^{g} apte à réagir avec R^{r} amine et/ou carboxyle et/ou amide du polyamide et choisie parmi les fonctions comprenant un ou plusieurs motifs réactifs de type :
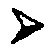 amine
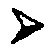 insaturation éthylènique
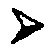 époxy
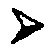 thiol
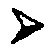 halogène
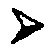 isocyanate
les fonctions R^{g} étant destinées à réagir directement avec les fonctions R^{r} pour permettre le greffage d'alcoxysilane sur le polyamide et lui conférer ainsi une aptitude à la réticulation en présence d'eau, ce greffage s'opérant dans des conditions de température et de pression choisies de telle sorte que le polyamide soit à l'état fondu, la concentration en précurseur (**III**) dans la composition étant supérieure à 3%, de préférence comprise entre 3 et 10 % en poids sec par rapport au mélange (**I**) (**II**) (**III**) et (**IV**).

7. Procédé selon la revendication 6, **caractérisé en ce qu'**il comprend les étapes essentielles suivantes :
- 1 - mise en présence d'une partie (**I**) des réactifs acide comprenant des comonomères diacide et d'une partie (**II**) des réactifs amine comprenant des comonomères diamine, et éventuellement d'autres additifs (**IV**) ;
- 2 - élimination d'eau ;
- 3 - cuisson pour permettre la copolymérisation ;
- 4 - élimination éventuelle d'eau résiduelle ;
- 5 - addition éventuelle d'additifs (**IV**) ;
- 6 - ajout du précurseur (**III**) du greffon et réaction de ce dernier avec le polyamide ;
- 7 - élimination de l'eau résiduelle ;
- 8 - recueil du polyamide réticulable greffé par des alcoxysilanes, et conditionnement de celui-ci à l'abri de l'eau.

8. Procédé selon la revendication 7, **caractérisé en ce qu'**il comprend les étapes essentielles suivantes :
- 1' - mise en fusion d'un polyamide à terminaisons acide et/ou amine et obtenu à partir de comonomères diacide et de comonomères diamine, éventuellement additionnés d'additifs (**IV**) ;
- 2' à 6' - correspondant aux étapes 4 à 8 définies dans la revendication 7.

9. Procédé selon la revendication 7, **caractérisé en ce que** la cuisson -3 - s'opère à la pression atmosphérique normale à une température supérieure à 120°C.

10. Procédé selon la revendication 8, **caractérisé en ce que** la fusion du polyamide s'effectue à la pression atmosphérique normale, à une température supérieure à 60°C.

11. Procédé selon l'une quelconque des revendications 7 à 10, **caractérisé en ce que** les produits mis en oeuvre sont tels que définis dans les revendications 2 à 5.

12. Procédé de revêtement de cartes électroniques, destinées notamment aux véhicules automobiles et aux appareils électroménagers, **caractérisé en ce qu'**il consiste essentiellement :
• à appliquer à l'état fondu, au moins un polyamide thermofusible selon l'une quelconque des revendications 1 à 5, ou tel qu'obtenu par le procédé selon l'une quelconque des revendications 6 à 12, sur la carte à revêtir,
• et à faire en sorte que ce ou ces polyamide(s) réticule(nt) en présence d'eau.

13. Procédé selon la revendication 12, **caractérisé en ce qu'**il comprend les étapes suivantes :
- 1 - délimitation de la zone à protéger sur la carte, à l'aide d'au moins un cordon de polymère, e.g. de PAR, très cohésif (forte viscosité) ;
- 2 - nappage de la zone ainsi délimitée avec un PAR suffisamment fluide pour être aisément étendable ;
- 3 - réticulation en atmosphère humide du PAR constituant le cordon et de préférence du PAR constituant la nappe contenue sur la carte à l'intérieur de l'enceinte délimitée par le cordon, pour atteindre les caractéristiques souhaitées de non-thermofusabilité.

14. Colle à fusion **caractérisée en ce qu'**elle comprend un polyamide thermofusible selon l'une quelconque des revendications 1 à 5, ou tel qu'obtenu par le procédé selon l'une quelconque des revendications 6 à 11.

## Patentansprüche

1. Wärmeschmelzbares Polyamid, das in Gegenwart von Wasser über Alkoxysilangruppen, welche dieses umfasst, vernetzbar ist, wobei das Polyamid erhalten wird ausgehend von:
- einem Säurebestandteil (I), welcher Disäure-Comonomere umfasst,
- einem Aminbestandteil (II), welcher Diamin-Comonomere umfasst,
- wenigstens einem Vorläufer (III) eines Pfropf-Alkoxysilans, welcher wenigstens eine Pfropffunktion R^{g} trägt,
- und gegebenenfalls einem oder mehreren Zusätzen (IV),
**dadurch gekennzeichnet, dass**:
• die Disäure-Comonomere wenigstens teilweise aus Fettsäure-Dimeren bestehen, welche 32 bis 44 Kohlenstoffatome aufweisen,
• dieses ein Molekulargewicht Mw, ausgedrückt in Dalton, von ≤ 20.000 besitzt;
• dieses im vernetzten Zustand vorliegt
→ eine mechanische Beständigkeit (R) - nach der Norm ASTM D 638 M - über oder gleich 4 Mpa;
→ eine Bruchdehnung (A) - nach der Norm ASTM D 638 M - über oder gleich 200%;
→ ein charakteristisches F der Biegung, gemessen in Stunden nach einem Test Tf (Flex-Test) der Ermüdung, bei welchem eine Folie des betrachteten Polyamids von 1 mm Dicke abwechselnd bei einer Hubzahl von 100 pro Minute um 45° gebogen wird;
wobei die Zeit F genommen wird, wenn das Probestück bricht:
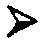 F ≥ 40
→ eine Temperaturbeständigkeit θ_{c}, gemessen in °C nach einem Test Ts (SAFT-Test), entsprechend der Norm ASTM D 4498:
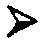 θ_{c} ≥ 180
• die Alkoxysilangruppen zur Vernetzung durch direktes Pfropfen auf die reaktiven Funktionen Rr = Amin und/oder Carboxyl und/oder Amid des Polyamids angebracht werden, ausgehend von einem Vorläufer (III) der Pfropf-Alkoxysilane der Formel:
(III) R^{g}-R¹-Si(R²)₃₋ₐ(R³)ₐ
in welchem:
■ a = 0, 1 oder 2
■ R^{g} eine Pfropffunktion ist, die ausgelegt ist, um mit R^{r} zu reagieren und ausgewählt ist aus den Funktionen, welche eines oder mehrere reaktive Motive des folgenden Typs umfassen:
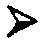 Amin
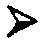 ethylenisch ungesättigte Bindung
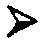 Epoxy
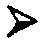 Thiol
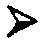 Halogen
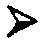 Isocyanat;
■ R¹ ein Alkylen mit C₁ - C₂₀, vorzugsweise mit C₁ - C₁₀ oder eine kovalente Bindung ist, welche Si direkt mit R^{g} verbindet;
■ R² eine Gruppe ist, welche einem Alkoxyl, einem Acyl oder einem Halogenid entspricht, wobei die Gruppen R², wenn a ≠ 2 ist, identisch oder voneinander verschieden sind;
■ R³ eine Alkylgruppe, vorzugsweise mit C₁ - C₆ ist, wobei die Gruppen R³, wenn a = 2 ist, identisch oder voneinander verschieden sind,
• die Konzentration des Voräufers (III) in der Zusammensetzung über 3% liegt, vorzugsweise zwischen 3 und 10% als Trockengewicht bezogen auf die Mischung (I) (II) (III) und (IV) liegt.

2. Wärmeschmelzbares Polyamid nach Anspruch 1, **dadurch gekennzeichnet:**
• **dass** für die Alkoxysilane der Formel (III) R^{g} ausgewählt wird aus der Gruppe der folgenden Funktionen:
Amin, Vinyl, Allyl, (Meth)acryloyl, Glycidyl, Glycidyloxy, Epoxy, Mercapto, Chlorid, Isocyanato;
• und **dass** dieses ein Molekulargewicht Mw, ausgedrückt in Dalton, besitzt von:
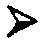 800 ≤ Mw ≤ 10.000.

3. Wärmeschmelzbares Polyamid nach Anspruch 1 oder 2, **dadurch gekennzeichnet, dass**:
→ der Säurebestandteil (I) umfasst:
- a - 0,1 bis 1 Mol eines oder mehrerer Fettsäure-Dimere,
- b - 0 bis 2 Mole einer oder mehrerer Dicarbonsäuren oder von deren Derivaten, welche 2 bis 22 Kohlenstoffatome aufweisen,
- c - 0 bis 1 Mol, vorzugsweise 0 bis 0,5 Mol, eines oder mehrerer Kettenabbruchmittel, die ausgewählt sind aus den Monofettsäuren, welche 1 bis 24 Kohlenstoffatome aufweisen;
→ und der Aminbestandteil (II) wenigstens teilweise aus Diaminen, und gegebenenfalls aus Monoaminen und/oder Tri- oder anderen Polyaminen, besteht.

4. Wärmeschmelzbares Polyamid nach irgendeinem der Ansprüche 1 bis 3, **dadurch gekennzeichnet, dass** die Dimere Ia zu dem Typ gehören, welcher 36 Kohlenstoffatome aufweist, und diese in Form einer Mischung, von welcher sie den Hauptbestandteil ausmachen und welche unter anderem Fettsäure-Monomere und/oder - Trimere umfasst, beigemengt sind.

5. Wärmeschmelzbares Polyamid nach irgendeinem der Ansprüche 1 bis 4, **dadurch gekennzeichnet, dass** die fakultativen Zusätze (IV) ausgewählt sind aus: Antioxidantien, Füllstoffen, Harzen, Wachsen, Polymeren, Weichmachern, Pigmenten, Farbstoffen, optischen Aufhellern, UV-Schutzmitteln und deren Mischungen.

6. Verfahren zur Herstellung eines wärmeschmelzbaren Polyamids nach irgendeinem der Ansprüche 1 bis 5, **dadurch gekennzeichnet, dass** dieses im Wesentlichen besteht aus dem Inkontaktbringen in wasserfreiem Milieu eines Polyamids, bei welchem die sich wiederholenden Einheiten aufgebaut sind aus Disäure-Comonomeren und Diamin-Comonomeren, wobei das Polyamid reaktive Carboxyl-, Amin- oder Amidfunktionen R^{r} trägt, mit wenigstens einem Vorläufer (III) eines Pfropf-Alkoxysilans, welcher wenigstens eine Pfropffunktion R^{g} umfasst, die ausgelegt ist, um mit R^{r} des Amins und/oder Carboxyls und/oder Amids des Polyamids zu reagieren, und welche ausgewählt ist aus den Funktionen, welche eines oder mehrere reaktive Motive des folgenden Typs umfassen:
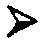 Amin
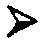 ethylenisch ungesättigte Bindung
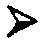 Epoxy
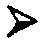 Thiol
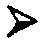 Halogen
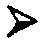 Isocyanat
wobei die Funktionen R^{g} dazu dienen sollen, direkt mit den Funktionen R^{r} zu reagieren, um das Pfropfen des Alkoxysilans auf das Polyamid zu ermöglichen und diesem so eine Eignung zum Vernetzen in Gegenwart von Wasser zu verleihen, wobei die Pfropfung unter derart ausgewählten Bedingungen von Temperatur und Druck betrieben wird, dass sich das Polyamid in geschmolzenem Zustand befindet, wobei die Konzentration des Vorläufers (III) in der Zusammensetzung über 3% liegt, vorzugsweise zwischen 3 und 10% als Trockengewicht bezogen auf die Mischung (I) (II) (III) und (IV) liegt.

7. Verfahren nach Anspruch 6, **dadurch gekennzeichnet, dass** dieses die folgenden wesentlichen Schritte umfasst:
- 1 - Inkontaktbringen eines Bestandteils (I) von Säure-Reagenzien, welche Disäure-Comonomere umfassen, und eines Bestandteils (II) von Amin-Reagenzien, welche Diamin-Comonomere umfassen, und gegebenenfalls anderer Zusätze (IV);
- 2 - Eliminierung von Wasser;
- 3 - Erhitzen, um die Copolymerisation zu ermöglichen;
- 4 - gegebenenfalls Eliminierung von restlichem Wasser;
- 5 - gegebenenfalls Zugabe von Zusätzen (IV);
- 6 - Zugeben des Vorläufers (III) des Pfropfmittels und Reaktion des letzteren mit dem Polyamid;
- 7 - Eliminierung von restlichem Wasser;
- 8 - Gewinnung des vernetzbaren Polyamids, das mit Alkoxysilanen gepfropft ist, und Lagern desselben geschützt vor Wasser.

8. Verfahren nach Anspruch 7, **dadurch gekennzeichnet, dass** dieses die folgenden wesentlichen Schritte umfasst:
- 1' - Verschmelzen eines Polyamids mit Säure- und/oder Amin-Endgruppen und erhalten ausgehend von Disäure-Comonomeren und Diamin-Comonomeren, gegebenenfalls zusätzlichen Zusätzen (IV);
- 2' bis 6' - entsprechend den Schritten 4 bis 8, welche in Anspruch 7 definiert sind.

9. Verfahren nach Anspruch 7, **dadurch gekennzeichnet, dass** das Erhitzen - 3 - bei normalem Atmosphärendruck bei einer Temperatur über 120°C betrieben wird.

10. Verfahren nach Anspruch 8, **dadurch gekennzeichnet, dass** das Verschmelzen des Polyamids bei normalem Atomsphärendruck bei einer Temperatur über 60°C bewirkt wird.

11. Verfahren nach irgendeinem der Ansprüche 7 bis 10, **dadurch gekennzeichnet, dass** die erhaltenen Produkte derart wie in den Ansprüchen 2 bis 5 definiert sind.

12. Verfahren zum Beschichten von elektronischen Karten, welche insbesondere für Kraftfahrzeuge und für elektrische Haushaltsgeräte bestimmt sind, **dadurch gekennzeichnet, dass** dieses im Wesentlichen besteht aus:
• dem Auftragen in geschmolzenem Zustand wenigstens eines wärmeschmelzbaren Polyamids nach irgendeinem der Ansprüche 1 bis 5 oder wie es nach dem Verfahren gemäß irgendeinem der Ansprüche 6 bis 12 erhalten wird, auf die zu beschichtende Karte,
• und dem Veranlassen, dass sich das oder die Polyamid(e) in Gegenwart von Wasser vernetzen.

13. Verfahren nach Anspruch 12, **dadurch gekennzeichnet, dass** es die folgenden Schritte umfasst:
- 1 - Abgrenzung der zu schützenden Zone auf der Karte mit Hilfe wenigstens eines Polymerbandes, z.B. aus PAR, das stark klebt (hohe Viskosität);
- 2 - Überziehen der so abgegrenzten Zone mit einem PAR, welches ausreichend flüssig ist, um leicht verteilt zu werden;
- 3 - Vernetzung in feuchter Atmosphäre des PAR, welches das Band ausmacht, und vorzugsweise des PAR, welches den Überzug ausmacht, welcher auf der Karte im Inneren des durch das Band eingeschlossenen abgegrenzten Bereichs enthalten ist, um die Charakteristika zu erreichen, welche für eine fehlende Wärmeschmelzbarkeit gewünscht werden.

14. Schmelzkleber, **dadurch gekennzeichnet, dass** dieser ein wärmeschmelzbares Polyamid nach irgendeinem der Ansprüche 1 bis 5 oder ein solches, das nach dem Verfahren gemäß irgendeinem der Ansprüche 6 bis 11 erhalten wird, umfasst.

## Claims

1. Hot-melt polyamide which can be crosslinked in the presence of water via the alkoxysilane groups which it comprises, this polyamide being obtained from:
- an acid part (I) comprising diacid comonomers,
- an amine part (II) comprising diamine comonomers,
- at least one precursor (III) of an alkoxysilane graft carrying at least one grafting functional group R^{g},
- and optionally one or more additives (IV),
**characterized in that**:
• the diacid comonomers are at least partially composed of fatty acid dimers comprising from 32 to 44 carbon atoms,
• it has a weight-average molar mass Mw, expressed in daltons, ≤ 20 000,
• it exhibits, in the crosslinked state,
→ a mechanical strength (S) (ASTM Standard D 638 M) of greater than or equal to 4 MPa,
→ an elongation at break (E) (ASTM Standard D 638 M) of greater than or equal to 200%,
→ a flexural characteristic F, measured in hours according to a fatigue test FT (flex test), in which a strip of polyamide under consideration, with a thickness of 1 mm, is alternately bent 100 times per minute to 45°, the time F being recorded when the test specimen breaks:
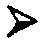 F ≥ 40
→ a resistance θ_{c} to heat, measured in °C according to an ST test (SAFT test), corresponding to ASTM Standard D 4498:
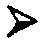 θ_{c} ≥ 180
• the crosslinking alkoxysilane groups are introduced by direct grafting, to the reactive functional groups R^{r} = amine and/or carboxyl and/or amide of the polyamide, of a precursor (III) of alkoxysilane grafts of formula:
(III) R^{g}-R¹-Si(R²)₃₋ₐ(R³)ₐ
in which:
■ a = 0, 1 or 2,
■ R^{g} is a grafting functional group capable of reacting with R^{r} which is chosen from the functional groups comprising one or more reactive units of type:
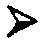 amine,
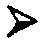 ethylenic unsaturation,
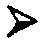 epoxy,
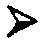 thiol,
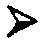 halogen,
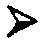 isocyanate,
■ R¹ is a C₁-C₂₀, advantageously C₁-C₁₀, alkylene or a covalent bond directly connecting Si to R^{g},
■ R² is a radical corresponding to an alkoxyl, an acyl or a halide, the R² radicals being identical to or different from one another when a ≠ 2,
■ R³ is an alkyl radical, preferably a C₁-C₆ alkyl radical, the R³ radicals being identical to or different from one another when a = 2,
• the concentration of precursor (III) in the composition is greater than 3%, preferably between 3 and 10%, by dry weight with respect to the mixture (I), (II), (III) and (IV).

2. Hot-melt polyamide according to Claim 1, **characterized:**
• **in that**, for the alkoxysilanes of formula (III), R^{g} is chosen from the group of following functional groups:
amine, vinyl, allyl, (meth)acryloyl, glycidyl, glycidyloxy, epoxy, mercapto, chloride and isocyanato,
• and **in that** it has a weight-average molar mass Mw, expressed in daltons:
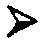 800 ≤ Mw ≤ 10 000

3. Hot-melt polyamide according to Claim 1 or 2, **characterized in that**:
→ the acid part (I) comprises:
(a) 0.1 to 1 mol of one or more fatty acid dimers,
(b) 0 to 2 mol of one or more dicarboxylic acids or their derivatives comprising from 2 to 22 carbon atoms,
(c) 0 to 1 mol, preferably 0 to 0.5 mol, of one or more chain stoppers chosen from fatty monoacids comprising from 1 to 24 carbon atoms,
→ and the amine part (II) is at least partially composed of diamines and optionally of monoamines and/or of tri- or other polyamines.

4. Hot-melt polyamide according to any one of Claims 1 to 3, **characterized in that** the dimers (Ia) are of the type of those comprising 36 carbon atoms and are incorporated in the form of a mixture of which they form the essential constituent and which additionally comprises fatty acid monomers and/or trimers.

5. Hot-melt polyamide according to any one of Claims 1 to 4, **characterized in that** the optional additives (IV) are chosen from: antioxidants, fillers, resins, waxes, polymers. plasticizers, pigments, dyes, whitening agents, UV stabilizers and their mixtures.

6. Process for producing the hot-melt polyamide according to any one of Claims 1 to 5, **characterized in that** it consists essentially in bringing together, in an anhydrous medium, a polyamide with repeat units composed of diacid comonomers and diamine comonomers, this polyamide carrying carboxyl, amine or amide reactive functional groups R^{r}, and at least one precursor (III) of an alkoxysilane graft comprising at least one grafting functional group R^{g} capable of reacting with amine and/or carboxyl and/or amide R^{r} of the polyamide which is chosen from the functional groups comprising one or more reactive units of type:
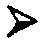 amine,
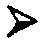 ethylenic unsaturation,
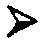 epoxy,
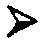 thiol,
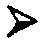 halogen,
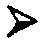 isocyanate,
the R^{g} functional groups being intended to react directly with the R^{r} functional groups to make possible the grafting of alkoxysilane to the polyamide and thus to confer thereon an ability to crosslink in the presence of water, this grafting being carried out under temperature and pressure conditions chosen so that the polyamide is in the molten state, the concentration of precursor (III) in the composition being greater than 3%, preferably between 3 and 10%, by dry weight with respect to the mixture (I), (II), (III) and (IV).

7. Process according to Claim 6, **characterized in that** it comprises the following essential stages:
1) bringing together a portion (I) of the acid reactants comprising diacid comonomers and a portion (II) of the amine reactants comprising diamine comonomers, and optionally other additives (IV),
2) removal of water,
3) curing to make possible copolymerisation,
4) optional removal of residual water,
5) optional addition of additives (IV),
6) addition of the precursor (III) of the graft and reaction of the latter with the polyamide,
7) removal of residual water,
8) collecting the crosslinkable polyamide grafted by alkoxysilanes and packaging of the latter with the exclusion of moisture.

8. Process according to Claim 7, **characterized in that** it comprises the following essential stages:
1') melting a polyamide comprising acid and/or amine endings which is obtained from diacid comonomers and diamine comonomers, optionally with the addition of additives (IV),
2') to 6') corresponding to stages 4 to 8 defined in Claim 7.

9. Process according to Claim 7, **characterized in that** the curing 3) is carried out at standard atmospheric pressure at a temperature of greater than 120°C.

10. Process according to Claim 8, **characterized in that** the melting of the polyamide is carried out at standard atmospheric pressure at a temperature of greater than 60°C.

11. Process according to any one of Claims 7 to 10, **characterized in that** the products employed are as defined in Claims 2 to 5.

12. Process for coating electronic boards intended in particular for motor vehicles and for domestic electrical appliances, **characterized in that** it consists essentially:
• in applying, in the molten state, at least one hot-melt polyamide according to any one of Claims 1 to 5 or as obtained by the process according to any one of Claims 6 to 12 to the board to be coated,
• and in ensuring that this or these polyamide(s) crosslink(s) in the presence of water.

13. Process according to Claim 12, **characterized in that** it comprises the following stages:
1) delimiting the area to be protected on the board using at least one string of very cohesive (high viscosity) polymer, e.g. CPA;
2) coating the area thus delimited with a CPA which is sufficiently fluid to be easily spreadable;
3) crosslinking, in a moist atmosphere, the CPA constituting the string and preferably the CPA constituting the coat present on the board inside the perimeter delimited by the string, to obtain the desired non-hot-melt characteristics.

14. Hot-melt adhesive, **characterized in that** it comprises a hot-melt polyamide according to any one of Claims 1 to 5 or as obtained by the process according to any one of Claims 6 to 11.
